# EUROPEAN PATENT APPLICATION

(11) **EP 4 517 912 A1**
(43) Date of publication of application: **05.03.2025**
(21) Application number: 22947211.3
(22) Date of filing: 21.06.2022
(51) Int. Cl.: H01M 10/42, H01M 50/30, H01M 50/655

(54) **BATTERY CELL, BATTERY, AND ELECTRIC DEVICE**

(71) Applicant: Contemporary Amperex Technology (Hong Kong) Limited, Hong Kong (HK)
(72) Inventor: SU, Huasheng, Ningde, Fujian 352100 (CN); XING, Chengyou, Ningde, Fujian 352100 (CN); XU, Chunguang, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2022/100174
(87) International publication number: WO 2023/245431

(57) **Abstract**

Embodiments of the present application provide a battery cell, a battery, and an electric device. The battery cell comprises: a housing having a first wall; a pressure relief mechanism provided on the first wall; an electrode leading-out portion provided on the housing; an electrode assembly provided in the housing and provided with tabs; and an adapter member connected to the electrode leading-out portion and the tabs, wherein the adapter member is provided with a reinforcing portion, and in the thickness direction of the first wall, the projection of the reinforcing portion on the first wall at least partially covers the pressure relief mechanism. The battery cell has high safety.

## Description

### Technical Field

The present application relates to the field of battery technologies, and in particular, to a battery cell, a battery, and an electric device.

### Background Art

Energy conservation and emission reduction are the key to sustainable development of the automotive industry. Electric vehicles have become an important part of the sustainable development of the automotive industry due to their advantages in energy conservation and environmental protection. For the electric vehicles, battery technologies are an important factor related to their development.

In the development of battery technologies, safety is also a non-negligible issue in addition to increasing energy densities of batteries. Therefore, how to improve the safety of batteries is an urgent technical problem to be solved by the battery technologies.

### Summary

The present application aims to provide a battery cell, a battery, and an electric device. The battery cell has high safety.

The present application is implemented through the following technical solutions.

In a first aspect, the present application provides a battery cell, including: a housing having a first wall; a pressure relief mechanism disposed on the first wall; an electrode leading-out portion disposed on the housing; an electrode assembly disposed inside the housing, where the electrode assembly is provided with a tab; and an adapter connecting the electrode leading-out portion and the tab; where the adapter is provided with a reinforcing portion, and a projection of the reinforcing portion on the first wall covers at least a portion of the pressure relief mechanism in a thickness direction of the first wall.

According to the battery cell of the embodiment of the present application, the adapter is provided with the reinforcing portion, and the reinforcing portion increases the strength of the adapter. Because the projection of the reinforcing portion on the first wall covers at least a portion of the pressure relief mechanism, the difficulty of deformation of the adapter increases during thermal runaway of the battery cell, which can reduce the risk of shielding and blockage of a pressure relief hole by the adapter, ensure pressure relief of the battery cell, and make the battery cell have high safety.

According to some embodiments of the present application, the adapter includes a tab connecting segment, the tab connecting segment is connected to the tab, and the reinforcing portion is disposed on the tab connecting segment.

In the foregoing solution, the reinforcing portion is disposed on the tab connecting segment to increase the strength of the tab connecting segment and reduce the risk of deformation of the tab connecting segment.

According to some embodiments of the present application, the reinforcing portion is a first flanging portion of the tab connecting segment, the tab connecting segment has a first surface facing the first wall and a second surface away from the first wall, and the first flanging portion is bent to one side of the first surface or the first flanging portion is bent to one side of the second surface.

In the foregoing solution, the reinforcing portion is the first flanging portion, and the first flanging portion is bent to one side of the first surface or the first flanging portion is bent to one side of the second surface for easy machining.

According to some embodiments of the present application, the first flanging portion is attached to the first surface or the second surface.

In the foregoing solution, the first flanging portion is attached to the first surface or the second surface to reduce the risk of up-warp of the first flanging portion and increase the difficulty of deformation of the reinforcing portion.

According to some embodiments of the present application, the tab connecting segment has a first surface facing the first wall and a second surface away from the first wall, a protrusion is formed on the first surface, and the protrusion is the reinforcing portion.

According to some embodiments of the present application, a groove is formed at a position, corresponding to the protrusion, of the second surface.

In the foregoing solution, the groove corresponding to the protrusion is formed on the other of the first surface or the second surface, which facilitates machining of the reinforcing portion and can reduce the weight of the tab connecting segment.

According to some embodiments of the present application, the tab connecting segment has a first surface facing the first wall and a second surface away from the first wall, the reinforcing portion forms a protrusion on the second surface, and the reinforcing portion forms a groove at a position corresponding to the protrusion on the first surface.

In the foregoing solution, the reinforcing portion forms the protrusion on the second surface and the groove on the first surface to increase the strength of the adapter and increase the difficulty of deformation of the adapter towards the first wall.

According to some embodiments of the present application, a projection of the groove on the first wall at least partially covers the pressure relief mechanism.

In the foregoing solution, the projection of the groove on the first wall at least partially covers the pressure relief mechanism, so that the reinforcing portion is less prone to deformation to shield and block the pressure relief hole, which ensures smooth pressure relief of the battery cell.

According to some embodiments of the present application, the groove extends to an edge of the adapter.

In the foregoing solution, the groove extends to the edge of the adapter to facilitate the formation of a gas flow channel at the reinforcing portion, facilitate the flow of gas towards the pressure relief mechanism via the reinforcing portion, and facilitate pressure relief by the pressure relief mechanism.

According to some embodiments of the present application, a groove wall of the groove is provided with a first gas discharging channel connecting an inside of the groove and an outside of the groove.

In the foregoing solution, the groove wall of the groove is provided with the first gas discharging channel connecting the inside of the groove and the outside of the groove, to facilitate entry of gas into the groove and flow towards the pressure relief mechanism, thereby ensuring smooth gas flow and facilitating the pressure relief by the pressure relief mechanism.

According to some embodiments of the present application, in the thickness direction, the distance between a bottom surface of the groove and the first wall is C1, and the distance between the first surface and the first wall is C2, satisfying 0.5 mm ≤ C1 - C2 ≤ 5 mm.

In the foregoing solution, the distance C1 between the bottom surface of the groove and the first wall and the distance C2 between the first surface and the first wall satisfy the above relationship, which ensures that gas flows towards the pressure relief mechanism, avoids blockage of the pressure relief hole even if the reinforcing portion deforms, can also ensure that the reinforcing portion does not occupy excessive assembly space, and ensures a high energy density of the battery cell.

According to some embodiments of the present application, 1 mm ≤ C1 - C2 ≤ 3 mm.

In the foregoing solution, the distance C1 between the bottom surface of the groove and the first wall and the distance C2 between the first surface and the first wall satisfy the above relationship, which further ensures the smooth flow of gas towards the pressure relief mechanism, and reasonably utilizes the assembly space to ensure the energy density of the battery cell compared to 0.5 mm ≤ C1 - C2 ≤ 5 mm.

According to some embodiments of the present application, the battery cell further comprises a support member, where the support member includes a bottom wall and side walls, the bottom wall is attached to the bottom surface of the groove, the side walls are formed at edges of the bottom wall, and the side walls are attached to side surfaces of the groove.

In the foregoing solution, the support member is disposed inside the groove, the bottom wall is attached to the bottom surface of the groove, and the side walls are attached to the side surfaces of the groove, thereby further increasing the strength of the reinforcing portion, reducing the risk of shielding and blockage of the pressure relief mechanism, and ensuring the pressure relief by the pressure relief mechanism.

According to some embodiments of the present application, the support member further includes second flanging portions, the second flanging portions are connected to the side walls, and the second flanging portions are located outside the groove and attached to the first surface.

In the foregoing solution, the second flanging portions are attached to the first surface, thereby ensuring a large connection area between the support member and the adapter and ensuring good connection stability between the support member and the adapter.

According to some embodiments of the present application, the tab connecting segment includes a main region and a connecting region, the connecting region is connected to the tab, and the reinforcing portion is disposed in the main region.

In the foregoing solution, the connecting region is connected to the tab, and the reinforcing portion is disposed in the main region, so as to prevent the reinforcing portion from interfering with the connection between the tab connecting segment and the tab.

According to some embodiments of the present application, the connecting region protrudes from the second surface, and a height at which the reinforcing portion protrudes from the second surface is less than or equal to a height at which the connecting region protrudes from the second surface.

In the foregoing solution, the height at which the reinforcing portion protrudes from the second surface is less than or equal to the height at which the connecting region protrudes from the second surface, so that the reinforcing portion occupies a small space in the thickness direction, which avoids interference with the connection between the connecting region and the tab while ensuring the strength of the reinforcing portion.

According to some embodiments of the present application, the battery cell further includes: a stopper disposed between the first wall and the reinforcing portion, where the stopper is configured to abut between the first wall and the reinforcing portion in a case of thermal runaway of the battery cell to form a second gas discharging channel between the reinforcing portion and the first wall.

In the foregoing solution, the stopper abuts between the first wall and the reinforcing portion in the case of thermal runaway of the battery cell to form the second gas discharging channel between the reinforcing portion and the first wall, and the gas flows towards the pressure relief mechanism via the second gas discharging channel to facilitate the pressure relief by the pressure relief mechanism.

According to some embodiments of the present application, the battery cell further includes: an insulating member located between the first wall and the adapter for insulating and isolating the first wall from the adapter; where a melting point of the stopper is higher than that of the insulating member, and the stopper is configured to prevent the adapter from shielding the pressure relief mechanism after the insulating member is melted.

In the foregoing solution, the insulating member is used for insulating and isolating the first wall from the adapter, so as to avoid a contact short circuit between the first wall and the adapter. The melting point of the stopper is higher than that of the insulating member, and when the battery cell undergoes thermal runaway, the insulating member is melted and the stopper is not easily melted, so as to form the second gas discharging channel between the reinforcing portion and the first wall.

According to some embodiments of the present application, the first wall has a third surface facing the interior of the battery cell, and the stopper is fixed to the first wall and protrudes from the third surface.

In the foregoing solution, the stopper is fixed to the first wall to ensure the connection strength between the stopper and the first wall; and the stopper protrudes from the third surface to facilitate the formation of the second gas discharging channel between the reinforcing portion and the third surface.

According to some embodiments of the present application, the insulating member includes a fourth surface facing the first wall and a fifth surface away from the first wall, the insulating member is provided with an accommodating portion for accommodating the stopper, and the accommodating portion forms a protrusion on the fifth surface and a groove corresponding to the protrusion on the fourth surface.

In the foregoing solution, the accommodating portion ensures an insulating effect between the first wall and the adapter.

According to some embodiments of the present application, the adapter includes a tab connecting segment, the tab connecting segment is connected to the tab, the tab connecting segment has a first surface facing the first wall, the distance between a sixth surface, facing the tab connecting segment, of the protrusion and the first wall is H1, the distance between the first surface and the first wall is H2, and the thickness of the reinforcing portion in the thickness direction is W1, satisfying H1 + W1 ≤ H2.

In the foregoing solution, in the thickness direction, the distance H1 between the sixth surface and the third surface, the distance H2 between the first surface and the third surface, and the thickness t1 of the reinforcing portion satisfy the above relationship, thereby reducing space occupation, and enabling the stopper to abut against the reinforcing portion in the case of thermal runaway of the battery cell to form the second gas discharging channel.

According to some embodiments of the present application, the melting point of the stopper is higher than 200°C.

In the foregoing solution, the melting point of the stopper satisfies the above condition to ensure that the stopper is not easily melted and has a good stopping effect.

According to some embodiments of the present application, the stopper includes a first sub-stopper and a second sub-stopper, and the pressure relief mechanism is disposed between the first sub-stopper and the second sub-stopper.

In the foregoing solution, the pressure relief mechanism is disposed between the first sub-stopper and the second sub-stopper to stop the reinforcing portion at two positions, so as to further ensure the stopping effect of the stopper.

According to some embodiments of the present application, in the thickness direction, the projection of the reinforcing portion on the first wall covers at least a portion of the first sub-stopper and at least a portion of the second sub-stopper.

In the foregoing solution, the projection of the reinforcing portion covers at least a portion of the first sub-stopper and at least a portion of the second sub-stopper to form a simply supported beam, so as to reduce the risk of deformation of the reinforcing portion.

According to some embodiments of the present application, in the thickness direction, projections of a center of the first sub-stopper and a center of the second sub-stopper on the adapter fall into the reinforcing portion.

In the foregoing solution, the projections of the center of the first sub-stopper and the center of the second sub-stopper on the adapter fall into the reinforcing portion to ensure that the reinforcing portion has a large overlap area with the first sub-stopper and the second sub-stopper. When the battery cell undergoes thermal runaway, the first sub-stopper and the second sub-stopper have a better stopping effect on the reinforcing portion to reduce the risk of shielding and blockage of the pressure relief hole due to the deformation of the reinforcing portion.

According to some embodiments of the present application, the tab is formed at one end of the electrode assembly close to the first wall, and the electrode leading-out portion is disposed on the first wall.

In the foregoing solution, the electrode leading-out portion is disposed on the first wall, and the distance between the tab and the first wall is short, so that the size of the adapter in the thickness direction of the first wall is small to facilitate the electrical connection between the tab and the electrode leading-out portion.

In a second aspect, the present application provides a battery, including a box and a plurality of battery cells as provided by the foregoing embodiments, where the plurality of battery cells are disposed in the box.

In a third aspect, the present application provides an electric device, including the battery cell(s) as provided by the foregoing embodiments.

Some of the additional aspects and advantages of the present application will be provided in the following description, and some will become apparent from the following description, or be learned by practice of the present application.

### Brief Description of Drawings

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.
FIG. 1 is a schematic structural diagram of a vehicle provided by some embodiments of the present application;
FIG. 2 is an exploded view of a battery provided by some embodiments of the present application;
FIG. 3 is an exploded view of a battery cell provided by some embodiments of the present application;
FIG. 4 is a schematic structural diagram of some components of the battery cell provided by some embodiments of the present application;
FIG. 5 is a schematic diagram of an unfolded state of an adapter provided by some embodiments of the present application;
FIG. 6 is a top view of the battery cell provided by some embodiments of the present application;
FIG. 7 is a schematic diagram of an unfolded state of the adapter provided by other embodiments of the present application;
FIG. 8 is a schematic structural diagram of a reinforcing portion provided by some embodiments of the present application;
FIG. 9 is a schematic structural diagram of the reinforcing portion provided by other embodiments of the present application;
FIG. 10 is a schematic structural diagram of the reinforcing portion provided by still other embodiments of the present application;
FIG. 11 is a partially enlarged view of part A in FIG. 10;
FIG. 12 is a schematic diagram of a first gas discharging channel provided by some embodiments of the present application;
FIG. 13 is a cross-sectional view of some components of the battery cell provided by some embodiments of the present application;
FIG. 14 is a partial cross-sectional view of the battery cell after thermal runaway (an insulating member is melted) according to other embodiments of the present application;
FIG. 15 is a cross-sectional view of some components of the battery cell provided by some embodiments of the present application; and
FIG. 16 is a schematic structural diagram of a first wall provided by some embodiments of the present application.

The drawings are not drawn to actual scale.

Reference numerals: 100 - battery; 10 - box; 11 - first portion; 12 - second portion; 20 - battery cell; 21 - housing; 211 - housing body; 212 - cover body; 213 - first wall; 2131 - third surface; 22 - pressure relief mechanism; 221 - pressure relief hole; 23 - electrode leading-out portion; 24 - electrode assembly; 241 - main body; 242 - tab; 25 - adapter; 251 - tab connecting segment; 251a - first surface; 251b - second surface; 2511 - reinforcing portion; 2511a - protrusion; 2511b - groove; 2512 - main region; 2513 - connecting region; 2514 - first gas discharging channel; 252 - leading-out portion connecting segment; 253 - transition connecting segment; 26 - support member; 261 - bottom wall; 262 - side wall; 263 - second flanging portion; 27 - stopper; 27a - first sub-stopper; 27b - second sub-stopper; 28 - insulating member; 281 - fourth surface; 282 - fifth surface; 283 - accommodating portion; 2831 - sixth surface; 29 - second gas discharging channel; 200 - controller; 300 - motor; 1000 - vehicle.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application.

The battery mentioned in the embodiments of the present application refers to a single physical module that includes one or more battery cells to provide higher voltage and capacity. The battery generally includes a box used for packaging one or more battery cells. The box may prevent liquid or other foreign matters from affecting charging or discharging of the battery cells.

The battery cell includes an electrode assembly and an electrolytic solution, and the electrode assembly is composed of a positive electrode sheet, a negative electrode sheet, and a separator. The battery cell mainly relies on migration of metal ions between the positive electrode plate and the negative electrode plate to work. The positive electrode plate includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive electrode tab. In an example of a lithium-ion battery, a material of the positive electrode current collector may be aluminum, and a positive electrode active material may be lithium cobaltate, lithium iron phosphate, ternary lithium, lithium manganate, or the like. The negative electrode plate includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative electrode tab. A material of the negative electrode current collector may be copper, and a negative electrode active material may be carbon, silicon, or the like. In order to ensure that no fusing occurs when high current passes through, there is a plurality of positive electrode tabs laminated together, and there is a plurality of negative electrode tabs laminated together. A material of the separator may be polypropylene (PP), polyethylene (PE), or the like.

The battery cell further includes an electrode leading-out portion and an adapter, the electrode leading-out portion is used for leading out electrical energy of the battery cell, and the adapter is connected to the electrode leading-out portion and the tab.

The development of battery technology needs to consider various design factors simultaneously, such as energy density, cycle life, discharge capacity, charge and discharge rate, and other performance parameters. In addition, safety of batteries should also be considered.

A pressure relief mechanism is an element or component actuated on the battery cell to release internal pressure or temperature. The pressure relief mechanism may be actuated when the internal pressure or temperature of the battery cell reaches a threshold, or the pressure relief mechanism may be actuated under the detection and adjustment of a detection mechanism. The pressure relief mechanism may be in a form of an explosion-proof valve, a gas valve, a pressure relief valve, a safety valve, or the like, and may specifically employ a pressure- or temperature-sensitive element or structure. Alternatively, the pressure relief mechanism may be a scratch disposed on a housing of the battery cell, that is, when the internal pressure or temperature of the battery cell reaches a predetermined threshold, the pressure relief mechanism acts or a weak structure disposed in the pressure relief mechanism is broken to form a pressure relief hole for releasing the internal pressure or temperature.

The "actuated" mentioned in the present application indicates that the pressure relief mechanism acts or is activated to a certain state, so that the internal pressure or temperature of the battery cell is released. The action generated by the pressure relief mechanism may include, but is not limited to: at least a portion of the pressure relief mechanism is fractured, broken, torn, opened, or the like. This can release the pressure or temperature of the battery cell under conditions of controllable pressure or temperature, thereby avoiding potential more serious accidents.

The pressure relief mechanism on the battery cell has a significant impact on the safety of a battery. For example, when short-circuiting, overcharging, and other phenomena occur, thermal runaway may occur inside the battery cell, resulting in a sudden increase in pressure or temperature. In this case, the internal pressure and temperature can be released outward through the actuation of the pressure relief mechanism to prevent explosion and fire of the battery cell.

In existing technologies, even if the pressure relief mechanism is disposed in the battery cell, the battery cell is still prone to explosion and fire. The inventors found through research that the reason for the above problem is as follows: when the battery cell undergoes thermal runaway, the pressure relief mechanism actuates to form a pressure relief hole for discharging gas, an insulating member for insulating and isolating the housing and the adapter is melted, and the adapter is prone to deformation during the discharging, to shield and block the pressure relief hole, so that the internal pressure of the battery cell cannot be released or the release speed is greatly reduced, resulting in the explosion and fire of the battery cell.

In view of this, in order to solve the problem of poor safety of the battery cell due to the fact that the pressure relief mechanism is shield by the deformation of the adapter during thermal runaway of the battery cell, the inventor conducted in-depth research and designed a battery cell, in which the adapter is provided with a reinforcing portion to increase the strength of the adapter and increase the difficulty of deformation of the adapter during thermal runaway of the battery cell, so as to reduce the risk of shielding of the pressure relief mechanism by the adapter and ensure that the battery cell has high safety.

In such a battery cell, a projection of the reinforcing portion covers at least a portion of the pressure relief mechanism. When the battery cell undergoes thermal runaway, the pressure relief mechanism actuates to release the internal pressure, and the gas inside the battery cell flows towards the pressure relief mechanism. Because the reinforcing portion increases the strength of the adapter, when the gas acts on the adapter, the difficulty of deformation of the adapter increases, the reinforcing portion is less prone to deformation, the risk of shielding and blockage of the pressure relief hole by the reinforcing portion is relatively low, pressure relief by the pressure relief mechanism is facilitated, and the safety of the battery cell is improved.

The battery cell disclosed in the embodiments of the present application may be used, but not limited to, in an electric device such as a vehicle, a ship, or an aircraft. A power system of the electric device may be constituted by the battery cell, the battery, or the like disclosed in the present application.

An embodiment of the present application provides an electric device using a battery as a power supply. The electric device may be, but is not limited to a vehicle, a mobile phone, a portable device, a notebook computer, a ship, a spacecraft, an electric toy, an electric tool, or the like. The vehicle may be an oil-fueled vehicle, a gas vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not limit the foregoing electric devices.

For convenient description, the following embodiments are described by an example of a vehicle as an electric device.

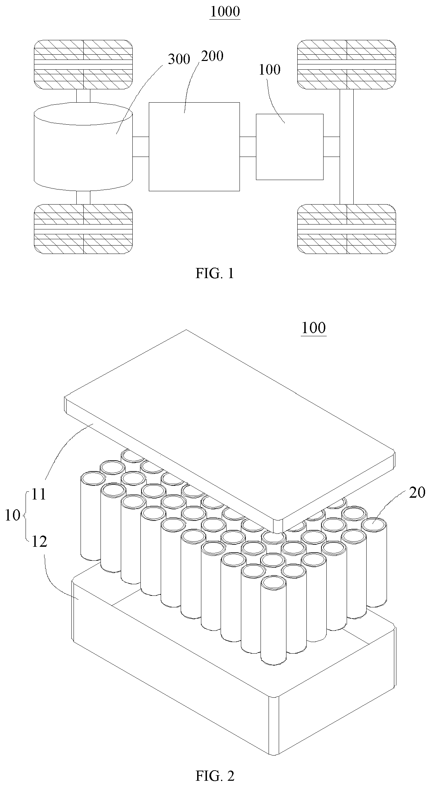

Referring to FIG. 1, FIG. 1 is a schematic structural diagram of a vehicle provided by some embodiments of the present application. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000.

The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is an exploded view of a battery provided by some embodiments of the present application. The battery 100 includes a box 10 and battery cells 20, where the battery cells 20 are disposed in the box 10.

The box 10 is a component that accommodates the battery cells 20, the box 10 provides an accommodating space for the battery cells 20, and the box 10 may have various structures. In some embodiments, the box 10 may include a first portion 11 and a second portion 12, and the first portion 11 and the second portion 12 cover each other to jointly confine the accommodating space for accommodating the battery cells 20. The first portion 11 and the second portion 12 may be in various shapes, such as cuboids or cylinders. The first portion 11 may be of a hollow structure with an open side, the second portion 12 may also be of a hollow structure with an open side, and the open side of the second portion 12 is closed to the open side of the first portion 11 to form the box 10 with the accommodating space. Alternatively, the first portion 11 is of a hollow structure with an open side, the second portion 12 is of a plate-like structure, and the second portion 12 is closed to the open side of the first portion 11 to form the box 10 with the accommodating space. The first portion 11 and the second portion 12 may be sealed by a sealing element, which may be a sealing ring, a sealant, or the like.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may first be connected in series, in parallel, or in series and parallel to form a battery module, and then a plurality of battery modules may be connected in series, in parallel, or in series and parallel to form a whole accommodated in the box 10. Alternatively, all the battery cells 20 may be directly connected in series, in parallel, or in series and parallel together, and then the whole formed by all the battery cells 20 is accommodated in the box 10.

In some embodiments, the battery 100 may further include a current collecting component, and the plurality of battery cells 20 may be electrically connected through the current collecting component to implement the parallel, series, or series-parallel connection of the plurality of battery cells 20. The current collecting component may be a metal conductor, such as copper, iron, aluminum, stainless steel, or aluminum alloy.

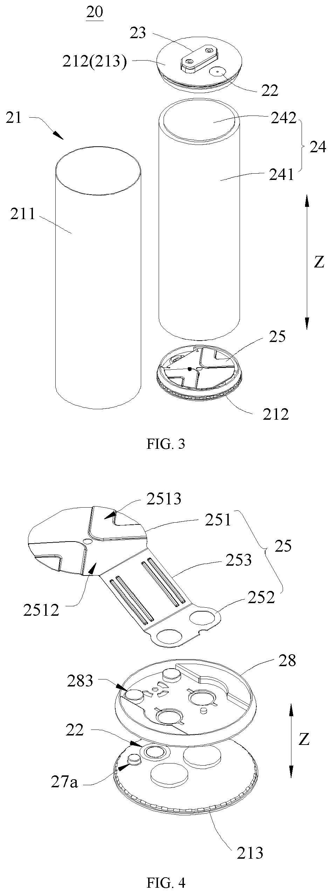

Referring to FIG. 3, FIG. 3 is an exploded view of a battery cell provided by some embodiments of the present application. The battery cell 20 may include a housing 21, a pressure relief mechanism 22, an electrode leading-out portion 23, an electrode assembly 24, and an adapter 25.

The housing 21 is a component used for accommodating the electrode assembly 24. The housing 21 may be in various shapes, such as cylindrical or cuboid. The housing 21 may include a housing body 211 and a cover body 212, the cover body 212 is closed to an opening of the housing body 211, and the cover body 212 and the housing body 211 jointly confine a sealed space.

The housing body 211 may be of a hollow structure with an opening formed at one end, or the housing body 211 may be of a hollow structure with openings formed at two opposite ends. A material of the housing body 211 may be various, such as copper, iron, aluminum, steel, or aluminum alloy.

The cover body 212 is a component that closes the opening of the housing body 211 to isolate an internal environment of the battery cell 20 from an external environment. The cover body 212 and the housing body 211 jointly confine the sealed space for accommodating the electrode assembly 24, an electrolytic solution, and other components. The cover body 212 may be connected to the housing body 211 by welding or rolling to close the opening of the housing body 211. A shape of the cover body 212 may be adapted to that of the housing 21. For example, the housing body 211 is of a cuboid structure, and the cover body 212 is of a rectangular plate-like structure adapted to the housing 21. For another example, the housing body 211 is of a cylindrical structure, and the cover body 212 is of a circular plate-like structure adapted to the housing body 211. A material of the cover body 212 may also be various, such as copper, iron, aluminum, steel, or aluminum alloy.

In the battery cell 20, there may be one or two cover bodies 212. In an embodiment where the housing body 211 is of a hollow structure with openings formed at two ends, two cover bodies 212 may be correspondingly disposed, the two cover bodies 212 close the two openings of the housing body 211 separately, and the two cover bodies 212 and the housing body 211 jointly confine the sealed space. In an embodiment where the housing body 211 is of a hollow structure with an opening at one end, one cover body 212 may be correspondingly disposed, the cover body 212 closes the opening at one end of the housing body 211, and the cover body 212 and the housing body 211 jointly confine the sealed space.

The electrode assembly 24 is a component that undergoes electrochemical reactions in the battery cell 20. The electrode assembly 24 may include a positive electrode plate, a negative electrode plate, and a separator. The electrode assembly 24 is of a wound structure formed by winding the positive electrode plate, the separator, and the negative electrode plate. The electrode assembly 24 has a positive electrode tab and a negative electrode tab, the positive electrode tab may be a portion of the positive electrode plate that is not coated with a positive electrode active material layer, and the negative electrode tab may be a portion of the negative electrode plate that is not coated with a negative electrode active material layer. The electrode assembly 24 includes a main body 241 and tabs 242, where the tabs 242 extend from an end(s) of the main body 241. For example, the positive electrode tab and the negative electrode tab may extend from one end of the main body 241, or the positive electrode tab and the negative electrode tab may extend from two opposite ends of the main body 241.

The pressure relief mechanism 22 is an element or component of the battery cell 20 that is actuated to release internal pressure or temperature when the battery undergoes thermal runaway. As shown in FIG. 3, the pressure relief mechanism 22 may be disposed on the cover body 212. In other embodiments, the pressure relief mechanism 22 may be disposed on the housing body 211.

The electrode leading-out portion 23 is a component for leading out electrical energy of the battery cell 20, and is electrically connected to an adjacent battery cell 20 or another conductive component. As shown in FIG. 3, the electrode leading-out portion 23 may be disposed on the cover body 212. In other embodiments, the electrode leading-out portion 23 may be disposed on the housing body 211. The electrode leading-out portion 23 may be an electrode terminal mounted on a first wall 213 or be a portion of the housing 21.

The adapter 25 is a component that implements electrical connection between the electrode leading-out portion 23 and the tab 242.

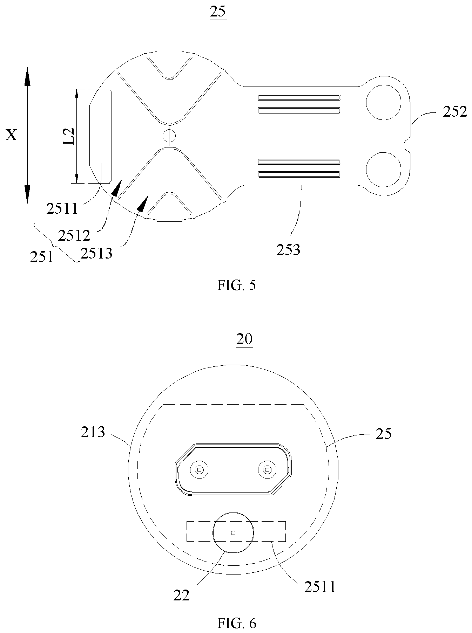

Referring to FIG. 3 and further referring to FIG. 4 to FIG. 6, FIG. 4 is a schematic structural diagram of some components of the battery cell provided by some embodiments of the present application, FIG. 5 is a schematic diagram of an unfolded state of the adapter provided by some embodiments of the present application, FIG. 6 is a top view of the battery cell provided by some embodiments of the present application, and FIG. 6 shows a schematic diagram of projections of a pressure relief mechanism and a tab connecting segment in a thickness direction of a first wall. According to some embodiments of the present application, the present application provides a battery cell 20. The battery cell 20 includes a housing 21, a pressure relief mechanism 22, an electrode leading-out portion 23, an electrode assembly 24, and an adapter 25. The housing 21 has a first wall 213, and the pressure relief mechanism 22 is disposed on the first wall 213. The electrode leading-out portion 23 is disposed on the housing 21. The electrode assembly 24 is disposed inside the housing 21, and the electrode assembly 24 is provided with a tab 242. The adapter 25 connects the electrode leading-out portion 23 and the tab 242. The adapter 25 is provided with a reinforcing portion 2511, and a projection of the reinforcing portion 2511 on the first wall 213 covers at least a portion of the pressure relief mechanism 22 in a thickness direction of the first wall 213.

In the figures, the direction indicated by the letter Z is the thickness direction Z of the first wall 213.

The electrode assembly 24 includes a main body 241 and a tab 242 extending from the main body 241. The tab 242 may extend from two sides of the main body 241 or from one side of the main body 241.

The electrode leading-out portion 23 may be disposed on the housing 21 in various ways. For example, the electrode leading-out portion 23 may be disposed on the first wall 213, or the electrode leading-out portion 23 may be disposed on another wall of the housing 21, such as a wall adjacent to the first wall 213. The electrode leading-out portion 23 may be an electrode terminal.

The adapter 25 is a component used for implementing electrical connection between the electrode leading-out portion 23 and the tab 242.

The reinforcing portion 2511 is used for increasing the strength of the adapter 25, so that the adapter 25 is less prone to deformation. For example, the reinforcing portion 2511 may be disposed on a tab connecting segment 251, so that under the action of external force (such as airflow), the position or region of the tab connecting segment 251 where the reinforcing portion 2511 is disposed is less prone to deformation.

"A projection of the reinforcing portion 2511 on the first wall 213 covers at least a portion of the pressure relief mechanism 22" indicates that the projection of the reinforcing portion 2511 on the first wall 213 may cover only a portion of the pressure relief mechanism 22; or the projection of the reinforcing portion 2511 on the first wall 213 completely covers the pressure relief mechanism 22.

In some embodiments, when the reinforcing portion 2511 is of an annular structure, the strength of the region enclosed by the contour of the annular structure is increased, and the projection of the region enclosed by the contour of the annular structure on the first wall 213 covers at least a portion of the pressure relief mechanism 22.

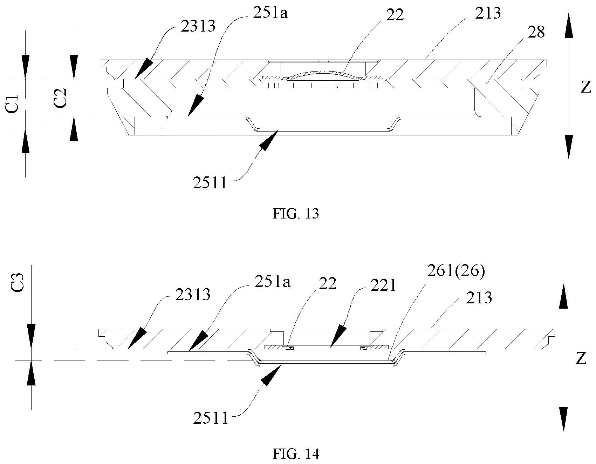

According to the battery cell 20 provided by the embodiment of the present application, when the battery cell 20 undergoes thermal runaway, the pressure relief mechanism 22 actuates to form a pressure relief hole 221 connecting the interior and exterior of the battery cell 20 (see FIG. 14). The adapter 25 is provided with the reinforcing portion 2511, and the reinforcing portion 2511 increases the strength of the adapter 25. Because the projection of the reinforcing portion 2511 on the first wall 213 at least partially covers the pressure relief mechanism 22, the difficulty of deformation of a portion, corresponding to the pressure relief mechanism 22, of the adapter 25 increases, which can reduce the risk of shielding and blockage of the pressure relief hole by the adapter 25, ensure pressure relief of the battery cell 20, and make the battery cell 20 have high safety.

According to some embodiments of the present application, the adapter 25 includes a tab connecting segment 251, the tab connecting segment 251 is connected to the tab 242, and the reinforcing portion 2511 is disposed on the tab connecting segment 251.

The adapter 25 further includes a leading-out portion connecting segment 252, the leading-out portion connecting segment 252 is connected to the electrode leading-out portion 23, and the tab connecting segment 251 and the leading-out portion connecting segment 252 may be located at two opposite ends of the adapter 25. The reinforcing portion 2511 is disposed on the tab connecting segment 251, so that under the action of external force (such as airflow), the position or region of the tab connecting segment 251 where the reinforcing portion 2511 is disposed is less prone to deformation. When the battery cell 20 undergoes thermal runaway, the deformation of the tab 242 directly leads to deformation of the tab connecting segment 251 towards the first wall 213. Therefore, the reinforcing portion 2511 is disposed on the tab connecting segment 251 to effectively increase the difficulty of deformation of the tab connecting segment 251. In addition, the area of the tab connecting segment 251 is generally larger, and the projection of the tab connecting segment 251 on the first wall 213 covers the pressure relief mechanism 22. The area of the leading-out portion connecting segment 252 is generally smaller, and the projection of the leading-out portion connecting segment 252 on the first wall 213 does not cover the pressure relief mechanism 22. Therefore, the reinforcing portion 2511 is disposed on the tab connecting segment 251.

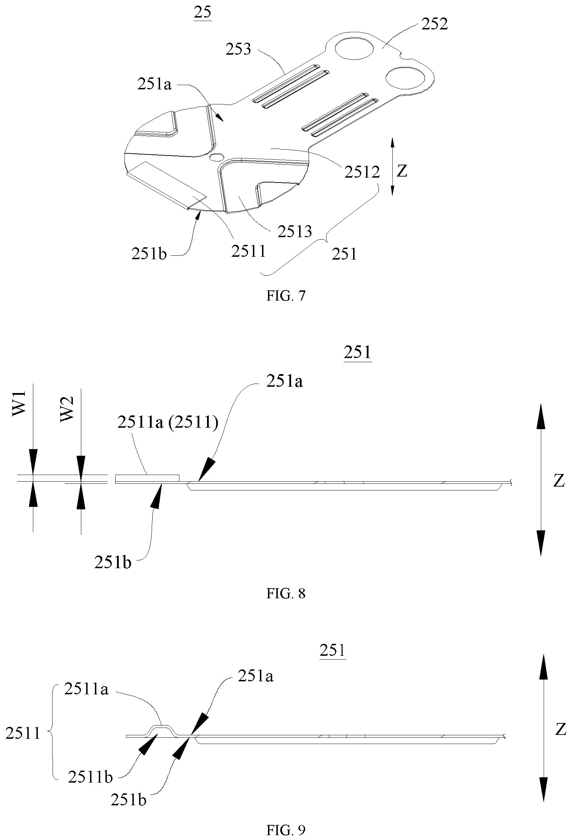

Referring to FIG. 7, FIG. 7 is a schematic diagram of an unfolded state of the adapter provided by other embodiments of the present application. According to some embodiments of the present application, as shown in FIG. 7, the reinforcing portion 2511 is a first flanging portion of the tab connecting segment 251, the tab connecting segment 251 has a first surface 251a facing the first wall 213 (see FIG. 4) and a second surface 251b away from the first wall 213, and the first flanging portion is bent to one side of the first surface 251a or the first flanging portion is bent to one side of the second surface 251b.

The reinforcing portion 2511 may be a flanging structure of the tab connecting segment 251.

The first surface 251a and the second surface 251b may be two opposite surfaces in a thickness direction of the tab connecting segment 251, and the thickness direction of the tab connecting segment 251 may be parallel to the thickness direction Z of the first wall 213.

The first flanging portion is bent to one side of the first surface 251a, that is, the reinforcing portion 2511 is bent from the tab connecting segment 251 towards one side of the first surface 251a to form the first flanging portion. The first flanging portion is bent to one side of the second surface 251b, that is, the reinforcing portion 2511 is bent from the tab connecting segment 251 towards one side of the second surface 251b to form the first flanging portion.

The reinforcing portion 2511 is the first flanging portion, and the first flanging portion is bent to one side of the first surface 251a or the first flanging portion is bent to one side of the second surface 251b for easy machining.

In some embodiments, the reinforcing portion 2511 is connected to an edge of the tab connecting segment 251 to facilitate bending.

According to some embodiments of the present application, the first flanging portion is attached to the first surface 251a or the second surface 251b.

The first flanging portion is attached to the first surface 251a, so that the first flanging portion has a large contact area with the first surface 251a. When the battery cell 20 undergoes thermal runaway and airflow acts on the tab connecting segment 251, the first flanging portion can block deformation of the first surface 251a towards the first wall 213, so that the difficulty of deformation of a coverage region between the first flanging portion and the first surface 251a increases, and the risk of shielding and blockage of the pressure relief hole by the tab connecting segment 251 is reduced.

The first flanging portion is attached to the second surface 251b, so that the first flanging portion has a large contact area with the second surface 251b. When the battery cell 20 undergoes thermal runaway and gas acts on the tab connecting segment 251, the second surface 251b can block deformation of the first flanging portion towards the first wall 213, so that the difficulty of deformation of a coverage region between the first flanging portion and the second surface 251b increases, and the risk of shielding and blockage of the pressure relief hole by the tab connecting segment 251 is reduced.

Referring to FIG. 8, FIG. 8 is a schematic structural diagram of a reinforcing portion provided by some embodiments of the present application. According to some embodiments of the present application, as shown in FIG. 8, the tab connecting segment 251 has a first surface 251a facing the first wall 213 and a second surface 251b away from the first wall 213, a protrusion 2511a is formed on the first surface 251a, and the protrusion 2511a is the reinforcing portion 2511.

The first surface 251a and the second surface 251b may be two opposite surfaces in the thickness direction of the tab connecting segment 251. When the reinforcing portion 2511 is the protrusion 2511a formed on the first surface 251a, the reinforcing portion 2511 protrudes from the first surface 251a in the thickness direction of the tab connecting segment 251.

The tab connecting segment 2511 includes a main region 2512, the main region 2512 is connected to the tab 242, the reinforcing portion 2511 is disposed in the main region 2512, the reinforcing portion 2511 may be split from the main region 2512, and the reinforcing portion 2511 is fixed to the first surface 251a. For example, the reinforcing portion 2511 is of a plate or sheet structure, and the reinforcing portion 2511 is welded to the main region 2512. Alternatively, the reinforcing portion 2511 is a portion of the main region 2512, for example, the reinforcing portion 2511 is a portion formed by stamping the tab connecting segment 2511, or the reinforcing portion 2511 is a thicker portion of the tab connecting segment 2511.

Referring to FIG. 9, FIG. 9 is a schematic structural diagram of the reinforcing portion provided by other embodiments of the present application. According to some embodiments of the present application, a groove 2511b is formed at a position, corresponding to the protrusion 2511a, of the second surface 251b.

In some embodiments, as shown in FIG. 9, the reinforcing portion 2511 is a structure integrally formed in the tab connecting segment 251, the reinforcing portion 2511 protrudes from the first surface 251a, and the groove 2511b is formed at the position, corresponding to the protrusion 2511a, of the second surface 251b. Based on the foregoing structure, the reinforcing portion 2511 may be a reinforcing rib formed by stamping on the tab connecting segment 251.

In the foregoing solution, the groove corresponding to the protrusion is formed on the second surface 251b, which facilitates machining of the reinforcing portion 2511 and can reduce the weight of the tab connecting segment 251.

According to some embodiments of the present application, as shown in FIG. 7 to FIG. 9, the reinforcing portion 2511 is located on a side, facing the first wall 213, of the tab connecting segment 251 (see FIG. 4).

The tab connecting segment 251 has the first surface 251a facing the first wall 213, and the reinforcing portion 2511 is located on the side where the tab connecting segment 251 has the first surface 251a, that is, the reinforcing portion 2511 is disposed on the first surface 251a.

The reinforcing portion 2511 is located on the side, facing the first wall 213, of the tab connecting segment 251, which can limit the deformation of the tab connecting segment 251 towards the first wall 213 and reduce the risk of shielding and blockage of the pressure relief hole by the tab connecting segment 251.

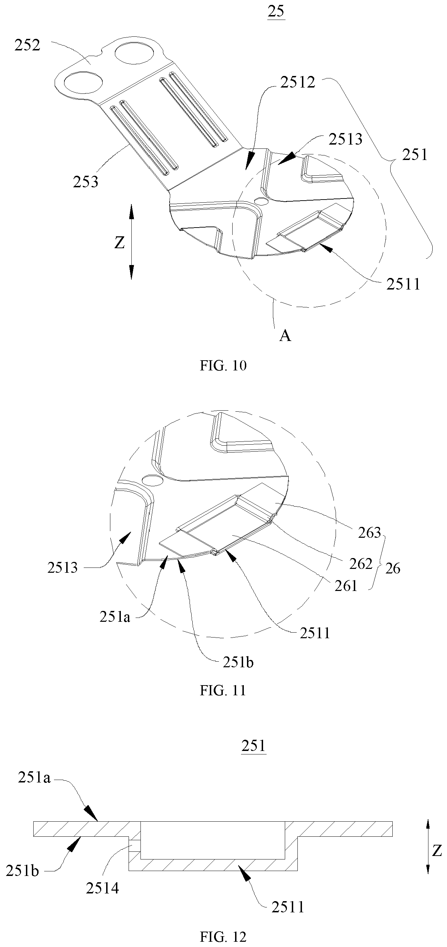

Referring to FIG. 10 and FIG. 11, FIG. 10 is a schematic structural diagram of the reinforcing portion provided by still other embodiments of the present application, and FIG. 11 is a partially enlarged view of part A in FIG. 10. According to some embodiments of the present application, the tab connecting segment 251 has a first surface 251a facing the first wall 213 and a second surface 251b away from the first wall 213, the reinforcing portion 2511 forms a protrusion on the second surface 251b, and the reinforcing portion 2511 forms a groove at a position corresponding to the protrusion on the first surface 251a.

The reinforcing portion 2511 may be formed by stamping the adapter 25; and the reinforcing portion 2511 forms the protrusion on the second surface 251b and the groove on the first surface 251a to increase the strength of the adapter 25 and increase the difficulty of deformation of the adapter 25 towards the first wall 213.

According to some embodiments of the present application, a projection of the groove on the first wall 213 covers at least a portion of the pressure relief mechanism 22.

The projection of the groove on the first wall 213 covers at least a portion of the pressure relief mechanism 22, that is, the projection of the groove on the first wall 213 covers only a portion of the pressure relief mechanism 22; or the projection of the groove on the first wall 213 completely covers the pressure relief mechanism 22. In the foregoing form, there is a gap between the pressure relief mechanism 22 and the tab connecting segment 251 in the thickness direction Z of the first wall 213, which reduces the risk of shielding and blockage of the pressure relief hole by the tab connecting segment 251.

In the foregoing solution, the projection of the groove on the first wall 213 covers at least a portion of the pressure relief mechanism 22, so that the reinforcing portion 2511 is less prone to deformation to shield and block the pressure relief hole, which ensures smooth pressure relief of the battery cell 20.

According to some embodiments of the present application, as shown in FIG. 10, the groove extends to an edge of the adapter 25.

In an embodiment where the reinforcing portion 2511 is disposed on the tab connecting segment 251, the groove can extend to the edge of the tab connecting segment 251, so that the groove is in communication with a space on a side of the tab connecting segment 251, and when the gas in the battery cell 20 flows towards the pressure relief mechanism 22, the gas can flow into the groove through the edge of the tab connecting segment 251 and flows towards the pressure relief mechanism 22.

In the foregoing solution, the groove extends to the edge of the adapter to facilitate the formation of a gas flow channel at the reinforcing portion 2511, facilitate the flow of gas towards the pressure relief mechanism 22 via the reinforcing portion 2511, and facilitate pressure relief by the pressure relief mechanism 22.

Referring to FIG. 12, FIG. 12 is a schematic diagram of a first gas discharging channel provided by some embodiments of the present application. According to some embodiments of the present application, a groove wall of the groove is provided with a first gas discharging channel 2514 connecting the inside of the groove and the outside of the groove.

The first gas discharging channel 2514 is a channel that runs through the groove wall of the groove, and the first gas discharging channel 2514 may be a through hole.

In the foregoing solution, the first gas discharging channel 2514 connects the inside and outside of the groove to facilitate entry of gas into the groove via the gas discharging channel and flow towards the pressure relief mechanism 22, thereby ensuring smooth gas flow and facilitating the pressure relief by the pressure relief mechanism 22.

Referring to FIG. 13, FIG. 13 is a cross-sectional view of some components of the battery cell provided by some embodiments of the present application. According to some embodiments of the present application, in the thickness direction Z, the distance between a bottom surface of the groove and the first wall 213 is C1, and the distance between the first surface 251a and the first wall 213 is C2, satisfying 0.5 mm ≤C1-C2≤5 mm.

In the thickness direction Z, an opening of the groove faces the first wall 213, the groove is recessed from a first side in the thickness direction Z away from the first wall 213, and the bottom surface of the groove is a surface, facing the first wall 213, of the groove. The bottom surface of the groove is away from the first wall 213 relative to the first surface.

In the foregoing solution, the distance C1 between the bottom surface of the groove and the first wall 213 and the distance C2 between the first surface 251a and the first wall 213 satisfy the above relationship, which ensures that gas flows towards the pressure relief mechanism 22, avoids blockage of the pressure relief hole even if the reinforcing portion 2511 deforms, can also ensure that the reinforcing portion 2511 does not occupy excessive assembly space, and ensures a high energy density of the battery cell 20. When the battery cell 20 undergoes thermal runaway, the reinforcing portion 2511 deforms. If the distance C1 between the bottom surface of the groove and the first wall 213 minus the distance C2 between the first surface 251a and the first wall 213 is less than 0.5 mm, the reinforcing portion 2511 after deformation easily shields and blocks the pressure relief hole to affect the pressure relief by the pressure relief mechanism 22. If the distance C1 between the bottom surface of the groove and the first wall 213 minus the distance C2 between the first surface 251a and the first wall 213 is greater than 5 mm, the reinforcing portion 2511 occupies a large mounting space in the thickness direction Z to affect the energy density of the battery cell 20.

Optionally, the difference between the distance C1 between the bottom surface of the groove and the first wall 213 and the distance C2 between the first surface 251a and the first wall 213 may be 0.5 mm, 1 mm, 1.5 mm, 2 mm, 2.5 mm, 3 mm, 3.5 mm, 4 mm, 4.5 mm, or 5 mm.

According to some embodiments of the present application, 1 mm ≤ C1 - C2 ≤ 3 mm.

The distance C1 between the bottom surface of the groove and the first wall 213 and the distance C2 between the first surface 251a and the first wall 213 satisfy the above relationship, which further ensures the smooth flow of gas towards the pressure relief mechanism 22, and reasonably utilizes the assembly space to ensure the energy density of the battery cell 20 compared to 0.5 mm ≤ C1 - C2 ≤ 5 mm.

Optionally, the difference between the distance C1 between the bottom surface of the groove and the first wall 213 and the distance C2 between the first surface 251a and the first wall 213 may be 1 mm, 1.5 mm, 2 mm, 2.5 mm, or 3 mm.

According to some embodiments of the present application, as shown in FIG. 10 and FIG. 11, the battery cell 20 further includes a support member 26, the support member 26 includes a bottom wall 261 and side walls 262, the bottom wall 261 is attached to the bottom surface of the groove, the side walls 262 are formed at edges of the bottom wall 261, and the side walls 262 are attached to side surfaces of the groove.

The support member 26 is a component that supports the reinforcing portion 2511. When the battery cell 20 undergoes thermal runaway, the support member 26 can constrain the deformation of the reinforcing portion 2511 to increase the difficulty of deformation of the reinforcing portion 2511.

The bottom wall 261 and the side walls 262 are two components of the support member 26, the side walls 262 are formed at the edges of the bottom wall 261, and the side walls 262 and the bottom wall 261 are integrally formed.

The bottom wall 261 is attached to the bottom surface of the groove, and the bottom wall 261 has a large contact area with the bottom surface of the groove, so the bottom wall 261 has a good blocking effect on the bottom surface of the groove. The bottom wall 261 can be welded to the bottom surface of the groove to ensure good connection strength between the bottom wall 261 and the bottom surface of the groove.

The side walls 262 are attached to the side surfaces of the groove, and the side walls 262 have large contact areas with the side surfaces of the groove, so the side walls 262 have a good blocking effect on the side surfaces of the groove. The side walls 262 can be welded to the side surfaces of the groove to ensure good connection strength between the side walls 262 and the side surfaces of the groove.

In the foregoing solution, the support member 26 is disposed inside the groove, the bottom wall 261 is attached to the bottom surface of the groove, the side walls 262 are attached to the side surfaces of the groove, and the contour of the support member 26 is adapted to the contour of the groove, thereby further increasing the strength of the reinforcing portion 2511, reducing the risk of shielding and blockage of the pressure relief mechanism 22, and ensuring the pressure relief by the pressure relief mechanism 22.

According to some embodiments of the present application, as shown in FIG. 11, the support member 26 further includes second flanging portions 263, the second flanging portions 263 are connected to the side walls 262, and the second flanging portions 263 are located outside the groove and attached to the first surface 251a.

The second flanging portions 263 are flanging structures connected to the side walls 262.

The second flanging portions 263 are located outside the groove and attached to the first surface 251a, so that the support member 26 and the tab connecting segment 251 have good connection stability. The second flanging portions 263 can be welded to the first surface 251a to ensure good connection strength between the second flanging portions 263 and the tab connecting segment 251.

The second flanging portions 263 are attached to the first surface 251a, thereby ensuring a large connection area between the support member 26 and the adapter 25 and ensuring good connection stability between the support member 26 and the adapter 25.

Referring to FIG. 14, FIG. 14 is a partial cross-sectional view of the battery cell 20 after thermal runaway (an insulating member is melted) according to other embodiments of the present application. FIG. 14 shows a cross-sectional view of a partial structure of the battery cell 20 after thermal runaway. According to some embodiments of the present application, the distance between a surface, facing the first wall 213, of the bottom wall 261 and the first wall 213 is C3, and the distance between the first surface 251a and the first wall 213 is C2, satisfying 0.5 mm ≤ C3 - C2 ≤ 5 mm.

In the foregoing solution, the distance C3 between the surface, facing the first wall 213, of the bottom wall 261 and the first wall 213 and the distance C2 between the first surface 251a and the first wall 213 satisfy the above relationship, which ensures that gas flows towards the pressure relief mechanism 22, avoids blockage of the pressure relief hole even if the reinforcing portion 2511 deforms, can also ensure that the reinforcing portion 2511 and the support member 26 do not occupy excessive assembly space, and ensures a high energy density of the battery cell 20. When the battery cell 20 undergoes thermal runaway, the reinforcing portion 2511 deforms. If the distance C3 between the surface, facing the first wall 213, of the bottom wall 261 and the first wall 213 minus the distance C2 between the first surface 251a and the first wall 213 is less than 0.5 mm, the support member 26 easily shields and blocks the pressure relief hole after the reinforcing portion 2511 deforms to affect the pressure relief by the pressure relief mechanism 22. If the distance C3 between the surface, facing the first wall 213, of the bottom wall 261 and the first wall 213 minus the distance C2 between the first surface 251a and the first wall 213 is greater than 5 mm, the reinforcing portion 2511 and the support member 26 occupy a large mounting space in the thickness direction Z to affect the energy density of the battery cell 20.

According to some embodiments of the present application, as shown in FIG. 10, the tab connecting segment 251 includes a main region 2512 and a connecting region 2513, the connecting region 2513 is connected to the tab 242, and the reinforcing portion 2511 is disposed in the main region 2512.

The connecting region 2513 is a region used for direct connection with the tab 242. The connecting region 2513 can be welded to the tab 242 to ensure connection stability between the tab connecting segment 251 and the tab 242. The connecting region 2513 is connected to the tab 242, and the reinforcing portion 2511 is disposed in the main region 2512, so as to prevent the reinforcing portion 2511 from interfering with the connection between the tab connecting segment 251 and the tab 242.

With reference to FIG. 11, according to some embodiments of the present application, the connecting region 2513 protrudes from the second surface 251b, and a height at which the reinforcing portion 2511 protrudes from the second surface 251b is less than or equal to a height at which the connecting region 2513 protrudes from the second surface 251b.

In the foregoing solution, the height at which the reinforcing portion 2511 protrudes from the second surface 251b is less than or equal to the height at which the connecting region 2513 protrudes from the second surface 251b, so that the reinforcing portion 2511 occupies a small space in the thickness direction Z, which avoids interference with the connection between the connecting region 2513 and the tab 242 while ensuring the strength of the reinforcing portion 2511.

According to some embodiments of the present application, the reinforcing portion 2511 has a thickness of W1, and the main region 2512 has a thickness of W2, satisfying W1/W2 > 1.1.

In an embodiment where the reinforcing portion 2511 is integrally formed on the tab connecting segment 251, the reinforcing portion 2511 may be a thicker portion of the tab connecting segment 251.

As shown in FIG. 8, in an embodiment where the reinforcing portion 2511 is split from the tab connecting segment 251, the reinforcing portion 2511 may be plate-like or sheet-like, materials of the main region 2512 and the reinforcing portion 2511 may be the same, the thickness W1 of the reinforcing portion 2511 and the thickness W2 of the main region 2512 satisfy the above relationship, and the strength of the reinforcing portion 2511 is greater than that of other portions of the main region 2512 without the reinforcing portion 2511, so that the deformation of the reinforcing portion 2511 is more difficult.

In an embodiment where the reinforcing portion 2511 is a protrusion formed on the first surface 251a, the thickness W1 of the reinforcing portion 2511 may be a height at which the reinforcing portion 2511 protrudes from the first surface 251a.

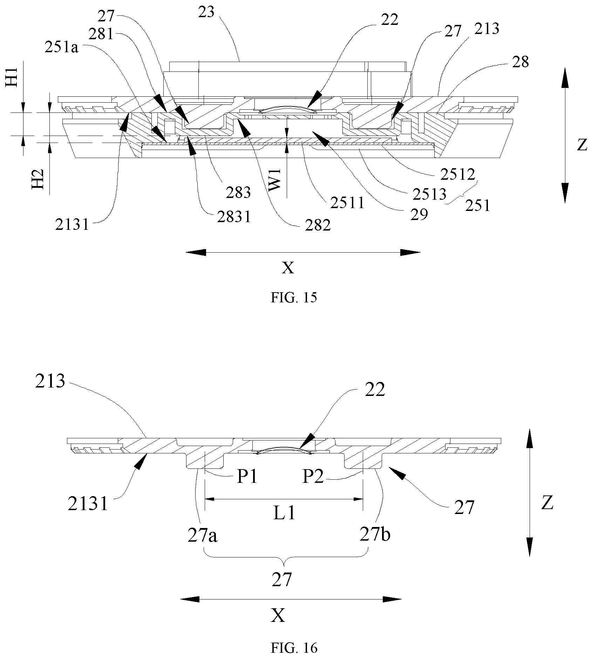

Referring to FIG. 4 and further referring to FIG. 15, FIG. 15 is a cross-sectional view of some components of the battery cell provided by some embodiments of the present application. According to some embodiments of the present application, the battery cell 20 further includes a stopper 27, the stopper 27 is disposed between the first wall 213 and the reinforcing portion 2511, the stopper 27 is configured to abut between the first wall 213 and the reinforcing portion 2511 in a case of thermal runaway of the battery cell 20 to form a second gas discharging channel 29 between the reinforcing portion 2511 and the first wall 213.

The stopper 27 is a component used for playing a blocking/stopping role.

The stopper 27 abuts between the first wall 213 and the reinforcing portion 2511 in the case of thermal runaway of the battery cell 20, so that a gap always exists between the reinforcing portion 2511 and the first wall 213 in the thickness direction Z of the first wall 213 to form the second gas discharging channel 29, and gas flows from the second gas discharging channel 29 towards the pressure relief mechanism 22.

In the foregoing solution, the stopper 27 abuts between the first wall 213 and the reinforcing portion 2511 in the case of thermal runaway of the battery cell 20 to form the second gas discharging channel 29 between the reinforcing portion 2511 and the first wall 213, and the gas flows towards the pressure relief mechanism 22 via the second gas discharging channel 29 to facilitate the pressure relief by the pressure relief mechanism 22.

According to some embodiments of the present application, as shown in FIG. 4 and FIG. 15, the battery cell 20 further includes an insulating member 28, the insulating member 28 is located between the first wall 213 and the adapter 25, and the insulating member 28 is used for insulating and isolating the first wall 213 and the adapter 25. The melting point of the stopper 27 is higher than that of the insulating member 28, and the stopper 27 is configured to prevent the adapter 25 from shielding the pressure relief hole after the insulating member 28 is melted.

A material of the insulating member 28 may be plastic, such as PP (polypropylene) or PE (polyethylene).

The melting point of the stopper 27 is higher than that of the insulating member 28. When the battery cell 20 undergoes thermal runaway, even if the insulating member 28 is melted, the stopper 27 can still be supported between the reinforcing portion 2511 and the first wall 213 to form the second gas discharging channel 29 between the reinforcing portion 2511 and the first wall 213, so as to prevent the adapter 25 from shielding the pressure relief hole.

In the foregoing solution, the insulating member 28 is used for insulating and isolating the first wall 213 and the adapter 25, so as to avoid a contact short circuit between the first wall 213 and the adapter 25. The melting point of the stopper 27 is higher than that of the insulating member 28, and when the battery cell 20 undergoes thermal runaway, the insulating member 28 is melted and the stopper 27 is not easily melted, so as to form the second gas discharging channel 29 between the reinforcing portion 2511 and the first wall 213.

Referring to FIG. 16, FIG. 16 is a schematic structural diagram of the first wall provided by some embodiments of the present application. According to some embodiments of the present application, the first wall 213 has a third surface 2131 facing the interior of the battery cell 20, and the stopper 27 is fixed to the first wall 213 and protrudes from the third surface 2131.

The third surface 2131 is a surface, facing the interior of the battery cell 20, of the first wall 213, that is, the third surface 2131 is a surface of the first wall 213 close to the electrode assembly 24 in the thickness direction Z.

The stopper 27 is fixed to the first wall 213 in various forms. For example, the stopper 27 may be integrally formed with the first wall 213. Alternatively, the stopper 27 may be split from and fixed to the first wall 213, for example, the stopper 27 is welded to the first wall 213, or the stopper 27 is embedded in a mounting hole of the first wall 213. A material of the stopper 27 may be the same as that of the first wall 213 to facilitate welding between the stopper 27 and the first wall 213; or a material of the stopper 27 may be different from that of the first wall 213, for example, the material of the first wall 213 may be aluminum, stainless steel, or aluminum alloy, and the material of the stopper 27 may be ceramic with good insulation effect and high strength.

The stopper 27 protrudes from the third surface 2131, indicating that an end, away from the first wall 213, of the stopper 27 in the thickness direction Z is closer to the electrode assembly 24 than the third surface 2131.

In the foregoing solution, the stopper 27 is fixed to the first wall 213 to ensure the connection strength between the stopper 27 and the first wall 213; and the stopper 27 protrudes from the third surface 2131 to facilitate the formation of the second gas discharging channel 29 between the reinforcing portion 2511 and the third surface 2131.

According to some embodiments of the present application, as shown in FIG. 15 and FIG. 16, the insulating member 28 includes a fourth surface 281 facing the first wall 213 and a fifth surface 282 away from the first wall 213, the insulating member 28 is provided with an accommodating portion 283 for accommodating the stopper 27, and the accommodating portion 283 forms a protrusion on the fifth surface 282 and a groove corresponding to the protrusion on the fourth surface 281.

The fourth surface 281 and the fifth surface 282 are two opposite surfaces of the insulating member 28 in a thickness direction of the insulating member 28, and the thickness direction of the insulating member 28 may be parallel to the thickness direction Z of the first wall 213.

The accommodating portion 283 is a portion of the insulating member 28 for accommodating the stopper 27, and the accommodating portion 283 is recessed from the fourth surface 281 in the thickness direction Z away from the first wall 213.

The accommodating portion 283 ensures an insulating effect between the first wall 213 and the adapter 25.

In some embodiments, the accommodating portion 283 may alternatively be a through hole, in which case the material of the stopper 27 is an insulating material and the stopper 27 passes through the through hole. The stopper 27 may abut against the reinforcing portion 2511 or have a gap with the reinforcing portion 2511 in the thickness direction Z.

According to some embodiments of the present application, as shown in FIG. 15, the adapter 25 includes a tab connecting segment 251, the tab connecting segment 251 has a first surface 251a facing the first wall 213, the distance between a sixth surface 2831, facing the tab connecting segment 251, of the protrusion and the first wall 213 is H1, the distance between the first surface 251a and the first wall 213 is H2, and the thickness of the reinforcing portion 2511 in the thickness direction Z is W1, satisfying H1 + W1 ≤ H2.

The first surface 251a is a surface, facing the first wall 213, of the tab connecting segment 251. The reinforcing portion 2511 is disposed on a side of the first surface 251a of the tab connecting segment 251, the reinforcing portion 2511 may be integrally formed on the first surface 251a, and the reinforcing portion 2511 may be a protrusion formed on the first surface 251a; or the reinforcing portion 2511 may be a first flanging portion formed at an edge of the tab connecting segment 251, and the first flanging portion is bent towards a side of the first surface 251a; or the reinforcing portion 2511 is split from the adapter 25, and the reinforcing portion 2511 is welded to the first surface 251a.

The sixth surface 2831 is a surface, away from the first wall 213, of the protrusion, that is, a surface, away from the first wall 213, of the accommodating portion 283. The distance between the sixth surface 2831 and the first wall 213 is H1, indicating that the distance between the surface, away from the first wall 213, of the accommodating portion 283 and the first wall 213.

The first surface 251a may be parallel to the third surface 2131, and the sixth surface 2831 may be parallel to the third surface 2131.

The thickness W1 of the reinforcing portion 2511 in the thickness direction Z may be the height at which the reinforcing portion 2511 protrudes from the first surface 251a, that is, the distance between the surface, away from the first surface 251a, of the reinforcing portion 2511 and the first surface 251a. Alternatively, the thickness direction of the reinforcing portion 2511 is parallel to the thickness direction Z of the first wall 213, and the thickness W1 of the reinforcing portion 2511 in the thickness direction Z is the thickness of the reinforcing portion 2511.

In the foregoing solution, in the thickness direction Z, the distance H1 between the sixth surface 2831 and the third surface 2131, the distance H2 between the first surface 251a and the third surface 2131, and the thickness W1 of the reinforcing portion 2511 in the thickness direction Z satisfy the above relationship, thereby reducing space occupation, and enabling the stopper 27 to abut against the reinforcing portion 2511 in the case of thermal runaway of the battery cell 20 to form the second gas discharging channel 29. When H1 + W1=H2, the accommodating portion 283 is in contact with the reinforcing portion 2511, and the accommodating portion 283 can abut against the reinforcing portion 2511 to limit the movement of the adapter 25 in the thickness direction Z.

According to some embodiments of the present application, the melting point of the stopper 27 is higher than 200°C.

The melting point of the stopper 27 is higher than 200°C. For example, the material of the stopper 27 may be a metal (such as iron, copper, or aluminum), or the material of the stopper 27 may be ceramic.

The melting point of the insulating member 28 may be less than 200°C. When the battery cell 20 undergoes thermal runaway, the insulating member 28 is first melted, and the stopper 27 is supported between the reinforcing portion 2511 and the first wall 213 after the insulating member 28 is melted, so as to form the second gas discharging channel 29 between the reinforcing portion 2511 and the first wall 213.

In the foregoing solution, the melting point of the stopper 27 satisfies the above condition to ensure that the stopper 27 is not easily melted and has a good stopping effect.

According to some embodiments of the present application, as shown in FIG. 16, the stopper 27 includes a first sub-stopper 27a and a second sub-stopper 27b, and the pressure relief mechanism 22 is disposed between the first sub-stopper 27a and the second sub-stopper 27b.

The first sub-stopper 27a and the second sub-stopper 27b are two components of the stopper 27, and the first sub-stopper 27a and the second sub-stopper 27b are spaced apart.

The pressure relief mechanism 22 is disposed between the first sub-stopper 27a and the second sub-stopper 27b to stop the reinforcing portion 2511 at two positions, so as to further ensure the stopping effect of the stopper 27.

According to some embodiments of the present application, in the thickness direction Z, a projection of the reinforcing portion 2511 on the first wall 213 covers at least a portion of the first sub-stopper 27a and at least a portion of the second sub-stopper 27b.

The projection of the reinforcing portion 2511 on the first wall 213 may cover a portion of the first sub-stopper 27a and a portion of the second sub-stopper 27b, or the projection of the reinforcing portion 2511 on the first wall 213 may cover all of the first sub-stopper 27a and all of the second sub-stopper 27b.

That is, in the thickness direction Z, the projection of the reinforcing portion 2511 has a large overlap area with the first sub-stopper 27a and the second sub-stopper 27b.

The reinforcing portion 2511 has strong strength. When the reinforcing portion 2511 abuts against the first sub-stopper 27a and the second sub-stopper 27b, the reinforcing portion 2511 forms a simply supported beam with the first sub-stopper 27a and the second sub-stopper 27b, to reduce the risk of shielding and blockage of the pressure relief hole due to the deformation of the reinforcing portion 2511.

According to some embodiments of the present application, in the thickness direction Z, projections of a center of the first sub-stopper 27a and a center of the second sub-stopper 27b on the adapter 25 fall into the reinforcing portion 2511.

The center of the first sub-stopper 27a and the center of the second sub-stopper 27b are geometric centers of the first sub-stopper 27a and the second sub-stopper 27b, respectively.

The projections of the center of the first sub-stopper 27a and the center of the second sub-stopper 27b on the adapter 25 fall into the reinforcing portion 2511, so that the reinforcing portion 2511, the first sub-stopper 27a and the second sub-stopper 27b.

As shown in FIG. 5 and FIG. 16, the first sub-stopper 27a and the second sub-stopper 27b are spaced apart in a first direction X, the distance between a centerline P1 of the first sub-stopper 27a and a centerline P2 of the second sub-stopper 27b is L1, and a size of the reinforcing portion 2511 in the first direction X is L2, satisfying L1 ≤ L2.

In the figures, the direction indicated by the letter X is the first direction, and the first direction X is perpendicular to the thickness direction Z.

Optionally, a cross section of the first sub-stopper 27a and a cross section of the second sub-stopper 27b are regular as an example, and the distance between the centerline of the reinforcing portion 2511 and the centerline of the first sub-stopper 27a is equal to the distance between the centerline of the reinforcing portion 2511 and the centerline of the second sub-stopper 27b, so as to ensure that the reinforcing portion 2511 receives balanced stopping force from the first sub-stopper 27a and the second sub-stopper 27b when the battery cell 20 undergoes thermal runaway.

In the foregoing solution, the distance L1 between the centerline P1 of the first sub-stopper 27a and the centerline P2 of the second sub-stopper 27b and the size L2 of the reinforcing portion 2511 in the first direction X satisfy the above relationship, thereby ensuring that the reinforcing portion 2511 has a large overlap area with the first sub-stopper 27a and the second sub-stopper 27b. When the battery cell 20 undergoes thermal runaway, the reinforcing portion 2511 can overlap with the first sub-stopper 27a and the second sub-stopper 27b, so that the first sub-stopper 27a and the second sub-stopper 27b have a better blocking effect on the reinforcing portion 2511 to reduce the risk of shielding and blockage of the pressure relief hole due to the deformation of the reinforcing portion 2511.

According to some embodiments of the present application, the adapter 25 includes a leading-out portion connecting segment 252 and a tab connecting segment 251, the leading-out portion connecting segment 252 is connected to the electrode leading-out portion 23, the tab connecting segment 251 includes a main region 2512 and a connecting region 2513, the connecting region 2513 is connected to the tab 242, and the reinforcing portion 2511 is disposed in the main region 2512.

The reinforcing portion 2511 is disposed in the main region 2512 to avoid interference with the connecting region 2513. The connecting region 2513 is connected to the tab 242 to ensure stable connection between the tab connecting segment 251 and the tab 242, so as to transmit current.

According to some embodiments of the present application, as shown in FIG. 4, the tab 242 is formed at one end of the electrode assembly 24 close to the first wall 213, and the electrode leading-out portion 23 is disposed on the first wall 213.

The electrode assembly 24 includes a main body 241 and a tab 242 extending from the main body 241, and the tab 242 extending from one end of the main body 241 close to the first wall 213.

The electrode leading-out portion 23 is disposed on the first wall 213, and the distance between the tab 242 and the first wall 213 is short, so that the size of the adapter 25 in the thickness direction Z of the first wall 213 is small to facilitate the electrical connection between the tab 242 and the electrode leading-out portion 23.

According to some embodiments of the present application, as shown in FIG. 4, the housing 21 includes a housing body 211 and a cover body 212. The housing body 211 has an opening, and the electrode assembly 24 is disposed inside the housing body 211; and the cover body 212 closes the opening to form a sealed space. The cover body 212 is the first wall 213, and the electrode leading-out portion 23 is disposed on the cover body 212.

The pressure relief mechanism 22 and the electrode leading-out portion 23 are both disposed on the cover body 212. When the tab 242 is formed at one end of the electrode assembly 24 close to the cover body 212, the battery cell 20 is structurally compact and makes full use of an assembly space.

In some embodiments, the first wall 213 may alternatively be a wall of the housing body 211.

According to some embodiments of the present application, as shown in FIGS. 4, 5, 7, and 10, the adapter 25 further includes a transition connecting segment 253, and the transition connecting segment 253 connects the tab connecting segment 251 and the leading-out portion connecting segment 252. In order to reduce the assembly space occupied by the adapter 25, the transition connecting segment 253 is bent relative to the tab connecting segment 251, the transition connecting segment 253 is bent relative to the leading-out portion connecting segment 252, and the adapter 25 is Z-shaped.

In the thickness direction Z, the projection of the leading-out portion connecting segment 252 on the first wall 213 and the projection of the transition connecting segment 253 on the first wall 213 do not overlap with the pressure relief mechanism 22. The reinforcing portion 2511 is located at one end of the tab connecting segment 251 away from the connection portion between the tab connecting segment 251 and the transition connecting segment 253.

According to some embodiments of the present application, the present application further provides a battery. The battery includes a box and a plurality of battery cells 20 as provided by the foregoing embodiments, and the plurality of battery cells 20 are disposed in the box.

According to some embodiments of the present application, the present application further provides an electric device. The electric device includes the battery cells 20 as provided by the foregoing embodiments, and the battery cells 20 are used for providing electrical energy for the electric device.

The electric device may be any of the above devices or systems using the battery cells 20.

According to some embodiments of the present application, with reference to FIGS. 3, 4, and 15, the present application provides a cylindrical battery cell. The cylindrical battery cell includes a housing 21, a pressure relief mechanism 22, an electrode leading-out portion 23, an electrode assembly 24, an adapter 25, and a stopper 27. The housing 21 includes a housing body 211 and a cover body 212, the housing body 211 has an opening, and the cover body 212 closes the opening to form a sealed space. The cover body 212 is the first wall 213, the pressure relief mechanism 22 is disposed on the first wall 213, and the electrode leading-out portion 23 is disposed on the first wall 213. The electrode assembly 24 is disposed inside the housing body 211, the electrode assembly 24 includes a tab 242, and the tab 242 is formed at one end of the electrode assembly 24 close to the first wall 213. The adapter 25 includes a tab connecting segment 251, a leading-out portion connecting segment 252, and a transition connecting segment 253. The transition connecting segment 253 connects the tab connecting segment 251 and the leading-out portion connecting segment 252, the tab connecting segment 251 is connected to the tab 242, and the leading-out portion connecting segment 252 is connected to the electrode leading-out portion 23. The tab connecting segment 251 is provided with a reinforcing portion 2511, and a projection of the reinforcing portion 2511 on the first wall 213 completely covers the pressure relief mechanism 22 in the thickness direction Z of the first wall 213. The reinforcing portion 2511 is a first flanging portion connected to an edge of the tab connecting segment 251, the tab connecting segment 251 has a first surface 251a facing the first wall 213 and a second surface 251b away from the first wall 213, the first flanging portion is bent to one side of the first surface 251a, and the first flanging portion is attached to the first surface 251a. The stopper 27 is disposed between the first wall 213 and the reinforcing portion 2511, and the stopper 27 is configured to abut between the first wall 213 and the reinforcing portion 2511 in a case of thermal runaway of the battery cell 20 to form a second gas discharging channel 29 between the reinforcing portion 2511 and the first wall 213.

In such a cylindrical battery cell, the reinforcing portion 2511 increases the strength of the tab connecting segment 251, and the stopper 27 is disposed between the first wall 213 and the reinforcing portion 2511, so that the second gas discharging channel 29 is formed between the reinforcing portion 2511 and the first wall 213 in the case of thermal runaway of the battery cell 20, to reduce the risk of shielding and blockage of the pressure relief hole by the reinforcing portion 2511, facilitate pressure relief by the pressure relief mechanism 22, and make the cylindrical battery cell have high safety.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A battery cell, comprising:
a housing having a first wall;
a pressure relief mechanism disposed on the first wall;
an electrode leading-out portion disposed on the housing;
an electrode assembly disposed inside the housing, wherein the electrode assembly is provided with a tab; and
an adapter connecting the electrode leading-out portion and the tab;
wherein the adapter is provided with a reinforcing portion, and a projection of the reinforcing portion on the first wall covers at least a portion of the pressure relief mechanism in a thickness direction of the first wall.

2. The battery cell according to claim 1, wherein the adapter comprises a tab connecting segment, the tab connecting segment is connected to the tab, and the reinforcing portion is disposed on the tab connecting segment.

3. The battery cell according to claim 2, wherein the reinforcing portion is a first flanging portion of the tab connecting segment, the tab connecting segment has a first surface facing the first wall and a second surface away from the first wall, and the first flanging portion is bent to one side of the first surface or the first flanging portion is bent to one side of the second surface.

4. The battery cell according to claim 3, wherein the first flanging portion is attached to the first surface or the second surface.

5. The battery cell according to claim 2, wherein the tab connecting segment has a first surface facing the first wall and a second surface away from the first wall, a protrusion is formed on the first surface, and the protrusion is the reinforcing portion.

6. The battery cell according to claim 5, wherein a groove is formed at a position of the second surface corresponding to the protrusion.

7. The battery cell according to claim 2, wherein the tab connecting segment has a first surface facing the first wall and a second surface away from the first wall, the reinforcing portion forms a protrusion on the second surface, and the reinforcing portion forms a groove at a position of the first surface corresponding to the protrusion.

8. The battery cell according to claim 7, wherein a projection of the groove on the first wall at least partially covers the pressure relief mechanism.

9. The battery cell according to claim 7 or 8, wherein the groove extends to an edge of the tab connecting segment.

10. The battery cell according to claim 7 or 8, wherein a groove wall of the groove is provided with a first gas discharging channel connecting an inside of the groove and an outside of the groove.

11. The battery cell according to any one of claims 7-10, wherein in the thickness direction, a distance between a bottom surface of the groove and the first wall is C1, and a distance between the first surface and the first wall is C2, satisfying 0.5 mm ≤ C1 - C2 ≤ 5 mm.

12. The battery cell according to claim 11, wherein 1 mm ≤ C1 - C2 ≤ 3 mm.

13. The battery cell according to any one of claims 7-12, wherein the battery cell further comprises:
a support member, wherein the support member comprises a bottom wall and side walls, the bottom wall is attached to a bottom surface of the groove, the side walls are formed at edges of the bottom wall, and the side walls are attached to side surfaces of the groove.

14. The battery cell according to claim 13, wherein the support member further comprises second flanging portions, the second flanging portions are connected to the side walls, and the second flanging portions are located outside the groove and attached to the first surface.

15. The battery cell according to any one of claims 7-14, wherein the tab connecting segment comprises a main region and a connecting region, the connecting region is connected to the tab, and the reinforcing portion is disposed in the main region.

16. The battery cell according to claim 15, wherein the connecting region protrudes from the second surface, and a height at which the reinforcing portion protrudes from the second surface is less than or equal to a height at which the connecting region protrudes from the second surface.

17. The battery cell according to any one of claims 1-16, wherein the battery cell further comprises:
a stopper disposed between the first wall and the reinforcing portion, wherein the stopper is configured to abut between the first wall and the reinforcing portion during thermal runaway of the battery cell to form a second gas discharging channel between the reinforcing portion and the first wall.

18. The battery cell according to claim 17, wherein the battery cell further comprises:
an insulating member located between the first wall and the adapter and configured for insulating and isolating the first wall from the adapter;
wherein a melting point of the stopper is higher than that of the insulating member, and the stopper is configured to prevent the adapter from shielding the pressure relief mechanism after the insulating member is melted.

19. The battery cell according to claim 18, wherein the first wall has a third surface facing an interior of the battery cell, and the stopper is fixed to the first wall and protrudes from the third surface.

20. The battery cell according to claim 18 or 19, wherein the insulating member comprises a fourth surface facing the first wall and a fifth surface away from the first wall, the insulating member is provided with an accommodating portion configured for accommodating the stopper, the accommodating portion forms a protrusion on the fifth surface and a groove on the fourth surface corresponding to the protrusion.

21. The battery cell according to claim 20, wherein the adapter comprises a tab connecting segment, the tab connecting segment is connected to the tab, the tab connecting segment has a first surface facing the first wall, a distance between a sixth surface of the protrusion facing the tab connecting segment and the first wall is H1, a distance between the first surface and the first wall is H2, and a thickness of the reinforcing portion in the thickness direction is W1, satisfying H1 + W1 ≤ H2.

22. The battery cell according to claim 18, wherein the melting point of the stopper is higher than 200°C.

23. The battery cell according to claim 18, wherein the stopper comprises a first sub-stopper and a second sub-stopper, and the pressure relief mechanism is disposed between the first sub-stopper and the second sub-stopper.

24. The battery cell according to claim 22, wherein in the thickness direction, the projection of the reinforcing portion on the first wall covers at least a portion of the first sub-stopper and at least a portion of the second sub-stopper.

25. The battery cell according to claim 24, wherein in the thickness direction, projections of a center of the first sub-stopper and a center of the second sub-stopper on the adapter fall into the reinforcing portion.

26. The battery cell according to any one of claims 1-25, wherein the tab is formed at one end of the electrode assembly close to the first wall, and the electrode leading-out portion is disposed on the first wall.

27. A battery, comprising a box and a plurality of battery cells each according to any one of claims 1-26, wherein the plurality of battery cells are disposed in the box.

28. An electric device, comprising at least one battery cell each according to any one of claims 1-26.
